# EUROPÄISCHE PATENTSCHRIFT

(11) **EP 1 239 744 B1**
(45) Veröffentlichungstag und Bekanntmachung des Hinweises auf die Patenterteilung: **16.07.2003**
(21) Anmeldenummer: 00991100.9
(22) Anmeldetag: 15.12.2000
(51) Int. Cl.: A23P 1/14, A23P 1/08, A23L 1/164, A23L 1/18, A23K 1/18

(54) **VERFAHREN ZUM HERSTELLEN GEFÜLLTER NAHRUNGSMITTEL-HOHLKÖRPER**
METHOD FOR PRODUCING FILLED FOODSTUFF HOLLOW BODIES
PROCEDE DE FABRICATION DE CORPS CREUX ALIMENTAIRES FOURRES

(30) Priorität: 24.12.1999 DE 19962866
(43) Veröffentlichungstag der Anmeldung: 18.09.2002
(73) Patentinhaber: Mars Inc., McLean, VA 22101 (US)
(72) Erfinder: STEIN VON KAMIENSKI, Botho, 27283 Verden-Walle (DE); SCHMIDT, Siegfried, 27283 Verden-Eitze (DE); TRACHEZ, Bruno, 45780 Vennecy (FR)
(74) Vertreter: Goddar, Heinz J., Dr.
(86) Internationale Anmeldenummer: DE0004524
(87) Internationale Veröffentlichungsnummer: WO01047378

(56) Entgegenhaltungen:
- EP-A- 0 927 522
- EP-A- 0 941 665
- WO-A-00/33674
- WO-A-96/21363
- WO-A-98/03080
- DE-A- 2 933 261
- GB-A- 2 324 701
- A.H. BARRETT: "Correlation of Extrudate Infusibility with Bulk Properties using Image Analyis" JOURNAL OF FOOD SCIENCE., Bd. 55, Nr. 5, 1990, Seiten 1378-1382, XP002165401 INSTITUTE OF FOOD TECHNOLOGISTS. CHICAGO., US ISSN: 0022-1147

## Beschreibung

Die Erfindung betrifft ein Verfahren zum Herstellen gefüllter Nahrungsmittel-Hohlkörper, wobei jeder Hohlkörper mindestens einen zur Umgebung offenen, mit einem bei Umgebungstemperatur festen Füllmaterial gefüllten Hohlraum mit einer Querschnittsabmessung zwischen etwa 0,25 mm² und etwa 1 cm² aufweist.

Es sind Verfahren zum Herstellen gefüllter Nahrungsmittel-Hohlkörper bzw. Verfahren zum Füllen vorgefertigter Hohlkörper bekannt, wobei in einem ersten Verfahren mit zwei parallelen Extrusionssträngen unterschiedlicher Materialien gearbeitet wird und der entstehende Extrusionskörper nach der Extrusion in kleine kompakte Stücke geschnitten wird, so daß sich Nahrungsmittel-Verbundkörper ergeben, die in einem Außenbereich ein Trägermaterial und in einem Hohlraum bzw. mehreren in dem Trägermaterial verteilt angeordneten Hohlräumen, die im fertigen Zustand nach außen offen sind, ein Füllmaterial aufweisen. In einem anderen Verfahren werden zunächst beispielsweise durch Extrusion Nahrungsmittel-Hohlkörper hergestellt, beispielsweise in Form kleiner Hohlzylinder, die an einem Endabschnitt geschlossen sein können, wobei die Hohlkörper anschließend mit einem Füllmatcrial gefüllt und der bzw. jeder Hohlraum an seiner Mündungs- bzw. Öffnungsfläche abgestreift wird, so daß sich das Füllmaterial möglichst ausschließlich innerhalb des Hohlraums befindet.

Die bekannten Verfahren sind dahingehend nachteilig, daß sie entweder einen relativ großen vorrichtungsmäßigen Aufwand erfordern, um ein koextrudiertes Produkt herzustellen, und/oder aufwendige Arbeitsschritte erfordern, wie beispielsweise das Abstreifen von Öffnungen der Hohlkörper.

Die Aufgabe der Erfindung besteht darin, ein weniger aufwendiges gattungsgmäßes Verfahren bereitzustellen, mit dem große Mengen herstellbar sind.

Diese Aufgabe wird erfindungsgemäß durch ein Verfahren zum Herstellen gefüllter Nahrungsmittel-Hohlkörper gelöst, wobei jeder Hohlkörper mindestens einen zur Umgebung offenen, mit einem bei Umgebungstemperatur festen Füllmaterial gefüllten Hohlraum mit einer Querschnittsabmessung zwischen etwa 0,25 mm² und etwa 1 cm² aufweist, wobei sich das Verfahren dadurch auszeichnet, daß die Hohlkörper in einem ersten Schritt bei reduziertem Druck mit dem Füllmaterial beschichtet werden, wobei eine Beschichtungstemperatur des Füllmaterials so eingestellt wird, daß das Füllmaterial fließfähig ist, und wobei in einem zweiten Schritt der Druck erhöht wird, damit das fließfähige Beschichtungsmaterial in die Hohlräume eintritt.

Es kann vorgesehen sein, daß das Füllmaterial aufgesprüht wird. Es kann ein wasserund/oder fetthaltiges und/oder proteinhaltiges Füllmaterial verwendet werden.

Die Beschichtungstemperatur kann zwischen 30°C und 98°C, bevorzugt 60°C betragen. In dem zweiten Schritt kann der Druck auf zwischen 20 mbar und 800 mbar, bevorzugt 200 mbar abgesenkt werden.

Es kann vorgesehen sein, daß die Hohlkörper durch Extrudieren hergestellt sind. Die Hohlkörper können hohlzylindrisch sein.

Die Hohlkörper können aus einem porösen Material hergestellt sein. Weiter kann vorgesehen sein, daß die Hohlkörper vor dem ersten Schritt mit einem Beschichtungsmaterial vakuumbeschichtet werden. Zusätzlich kann vorgesehen sein, daß die Hohlkörper vor dem ersten Schritt, insbesondere vor dem Vakuumbeschichten, unter reduziertem Druck getrocknet werden.

Es kann vorgesehen sein, daß die Hohlkörper Hohlräume aufweisen, die mit einem und/oder mehreren Endabschnitten zur Umgebung hin offen sind.

Zweckmäßigerweise wird die Beschichtungstemperatur so eingestellt, daß die resultierende Viskosität des Füllmaterials dazu führt, daß das Füllmaterial weitestmöglich in die Hohlräume der Hohlkörper vordringt. Bevorzugt ist vorgesehen, daß das Füllmaterial die Hohlräume vollständig ausfüllt.

In einer besonders zweckmäßigen Ausführungsform ist vorgesehen, daß in dem ersten Schritt eine solche Füllmaterialmenge verwendet wird, daß sich nach dem zweiten Schritt im wesentlichen kein Füllmaterial mehr außerhalb der Hohlräume auf den Hohlkörpern befindet.

Vorzugsweise wird eine Vielzahl von Hohlkörpern gleichzeitig in einem Mischgefäß gefüllt bzw. es werden gefüllte Hohlkörper hergestellt, wobei die Hohlkörper während des ersten und/oder zweiten Schritts gerührt bzw. gemischt werden.

Es kann vorgesehen sein, daß die gefüllten Hohlkörper nach dem zweiten Schritt mit einem Farb- und/oder Geschmacksstoffe enthaltenden Überzugsmaterial beschichtet werden.

Die Erfindung wird nachfolgend anhand eines Ausführungsbeispiels beschrieben, wobei auf eine Zeichnung Bezug genommen ist, in der
Fig. 1 ein vereinfachtes Anlagenschema zur Ausführung des erfindungsgemäßen Verfahrens zeigt, und
Fig. 2 Temperatur- und Druckverläufe während der einzelnen Verfahrensschritte in einem Vakuumbeschichtungsgerät zeigt, wie es in der Anlage nach Fig. 1 verwendet wird, und
Fig. 3 ein an sich bekanntes Vakuumbeschichtungsgerät zeigt.

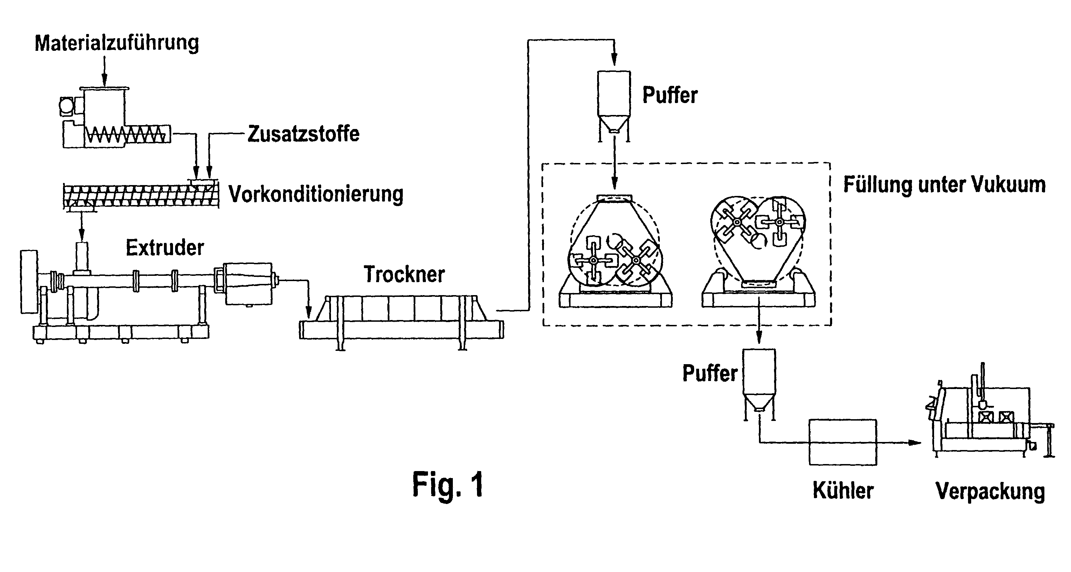

Fig. 1 zeigt schematisch eine Anlage zur Durchführung des erfindungsgemäßen Verfahrens zum Herstellen gefüllter Nahrungsmittel-Hohlkörper, wobei ein Ausgangsmaterial nach Zugabe von Zusatzstoffen wie Fett. Wasser usw. vorkonditioniert und in einem Extruder zu einer gewünschten Querschnittsform extrudiert wird, wobei beispielsweise die Herstellung eines hohlzylindrischen Querschnitts betrachtet sei. In einer typischen Situation hat das extrudierte Material unmittelbar vor der Extrudermündung eine Temperatur von ca. 125°C und einen Feuchtigkeitsgehalt von 25%. Nach Zerkleinerung des extrudierten strangförmigen Materials in eine gewünschte Länge von beispielsweise 1 cm treten die so hergestellten Hohlkörper in einen Trockner ein, bei dem sie beispielsweise 30 Minuten bei 140°C (Produkttemperatur ca. 95°C) auf einen Feuchtigkeitsgehalt von 6% getrocknet und in einen Puffer transportiert werden.

Größe, Form und Anzahl von Hohlräumen je Hohlkörper sind grundsätzlich beliebig, wobei neben einer hohlzylindrischen Ausführung beliebige andere Ausführungsformen möglich sind, wie beispielsweise Körper mit mehreren zylindrischen oder auch kegelförmig zulaufenden Öffnungen, wobei die Öffnungen zueinander parallel oder in unterschiedlichen Richtungen verlaufen können. Die Hohlräume können nach Art von Sacklöchern "blind" in dem Hohlkörper enden, und mehrere Hohlkörper können untereinander in Verbindung stehen. Wesentlich ist nur, daß jeder einzelne mit einem oder mehreren Hohlräumen versehene Grundkörper bzw. Hohlkörper eine gewisse Kapazität zur Aufnahme eines in einem Verarbeitungszustand fließfähigen und anschließend (bei Umgebungstemperatur) festen Füllmaterials aufweist. Außerdem sollen die Öffnungen bzw. Hohlräume so groß sein, daß sie mit freiem Auge deutlich sichtbar sind, d.h. die Querschnittsabmessung soll mindestens etwa 0,25 mm² betragen, was einem Durchmesser von etwa 0,5 mm entspricht. Der maximale sinnvolle Durchmesser derartiger Öffnungen bzw. Hohlräume liegt bei etwa 1 cm² bzw. einem Durchmesser von ca. 1 cm, wenn es sich um Hohlräume mit kreisförmigem Querschnitt handelt.

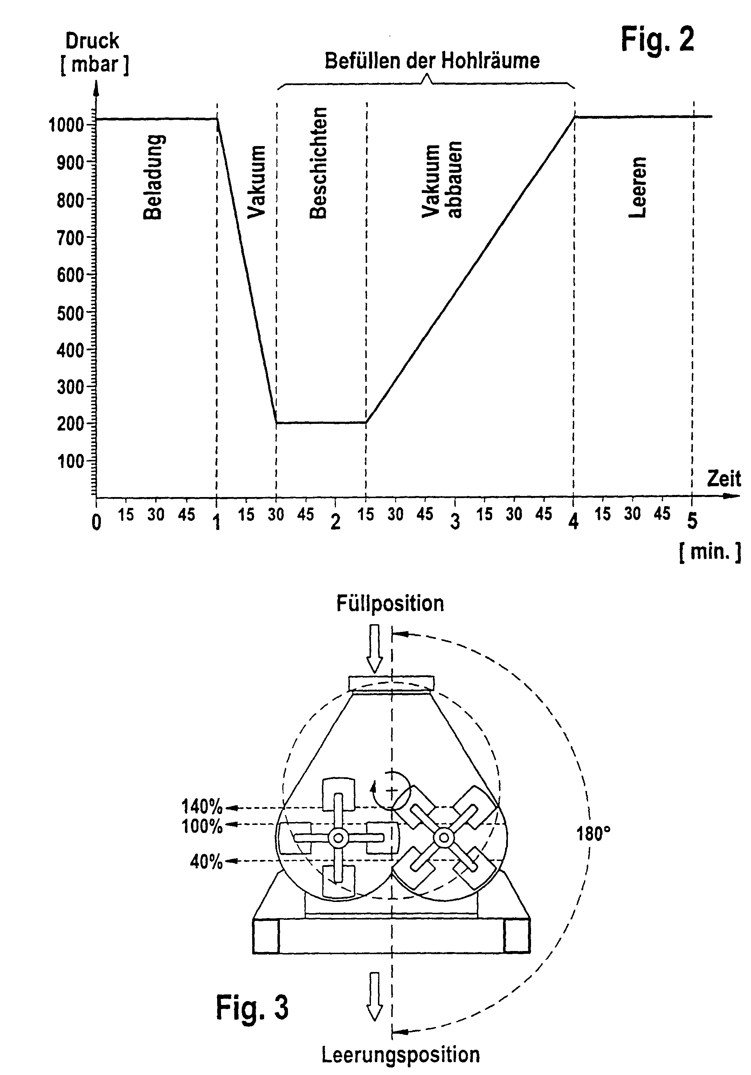

Der erfindungsgemäße Füll- bzw. Beschichtungsvorgang erfolgt in einem an sich bekannten, schwenkbaren Vakuummischer bzw. Vakuumbeschichter, der auch in Fig. 3 dargestellt ist. Wie Fig. 1 und Fig. 3 zeigen, besitzt der Vakuummischer ein um eine horizontale Schwenkachse drehbares Mischgefäß mit Mischflügeln und einer diesen gegenüberliegend angeordneten, verschließbaren Einfüll- bzw. Entleerungsöffnung. Durch Verschwenken um 180° wird der Mischer aus einer Füll- und Arbeitsposition in eine Leerungsposition gebracht.

Nach Einbringen einer gewünschten Menge von zu füllenden Nahrungsmittel-Hohlkörpern, die als Schüttgut aus dem Puffer übernommen werden, wird der Mischer verschlossen und der Druck innerhalb des Mischers auf ca. 200 mbar abgesenkt. Anschließend wird das gewünschte Füllmaterial, beispielsweise eine fett- und/oder wasser- und/oder proteinhaltige Masse auf die Hohlkörper gesprüht, wobei die Temperatur des Füllmaterials so eingestellt ist, daß das Material die Form einer fließfähigen Creme hat. Das Material kann beispielsweise eine Temperatur von ca. 60°C haben, wobei diese einzustellende Temperatur auch von der Temperatur der innerhalb des Mischers befindlichen Hohlkörper und dem Mengenverhältnis zwischen Füllmaterial und Hohlkörpern abhängt, da sich nach Kontakt zwischen Füllmaterial und Hohlkörpern eine gemeinsame Temperatur einstellt, die anders sein kann als die Temperatur, mit der das Füllmaterial eingesprüht wird. Das Füllmaterial muß während des anschließenden Füllvorgangs eine solche Viskosität aufweisen, daß es in die Hohlräume der Hohlkörper hineinfließt bzw. hineingedrückt wird und diese vorzugsweise weitestgehend bzw. vollständig ausfüllt.

Wenn sämtliches Füllmaterial in den Mischer eingesprüht werden ist und die Hohlkörper aufgrund des Mischvorgangs gleichmäßig mit dem Material beschichtet sind, wobei sich das Füllmaterial noch auf der Außenfläche der Hohlkörper befindet, wird der Druck innerhalb des Mischers allmählich wieder auf Umgebungsdruck angehoben, wobei sich überraschenderweise gezeigt hat, daß das ursprünglich auf der äußeren Oberfläche der Hohlkörper mehr oder weniger gleichmäßig verteilte Füllmaterial praktisch ausschließlich und vollständig in die Hohlräume der Hohlkörper hineingedrückt wird bzw. hineinfließt.

Fig. 2 erläutert den vorstehend beschriebenen Beschichtungsvorgang anhand des zeitlichen Druckverlaufs innerhalb des Mischers.

Bei Verwendung eines porösen Materials zur Herstellung der zu füllenden Grund- bzw. Hohlkörper können die Poren des Materials in einem vorgeschalteten Schritt mit einem beispielsweise fetthaltigen Beschichtungsmaterial gefüllt werden, wobei zweckmäßigerweise ebenfalls im Vakuumbeschichtungsverfahren gearbeitet wird Auch ist es möglich, die Trocknung der extrudierten Hohlkörper anstelle in einem separaten Trockner unmittelbar in dem Mischer durchzuführen, ggf. mit Energiezufuhr (Wärme) von außen, indem vor dem Beschichtungsvorgang der Druck innerhalb des Mischers deutlich unter 200 mbar abgesenkt wird, beispielsweise auf 40 mbar, was einer Siedetemperatur von ca. 30°C (bei wasserhaltigen Füllmaterialien) entspricht und eine relativ schnelle Trocknung und Kühlung bewirkt.

## Patentansprüche

1. Verfahren zum Herstellen gefüllter Nahrungsmittel-Hohlkörper, wobei jeder Hohlkörper mindestens einen zur Umgebung offenen, mit einem bei Umgebungstemperatur festen Füllmaterial gefüllten Hohlraum mit einer Querschnittsabmessung zwischen etwa 0,25 mm² und etwa 1 cm² aufweist, **dadurch gekennzeichnet, daß** die Hohlkörper in einem ersten Schritt bei reduziertem Druck mit dem Füllmaterial beschichtet werden, wobei eine Beschichtungstemperatur des Füllmaterials so eingestellt wird, daß das Füllmaterial fließfähig ist, und wobei in einem zweiten Schritt der Druck erhöht wird, damit das fließfähige Beschichtungsmaterial in die Hohlräume eintritt.

2. Verfahren nach Anspruch 1, **dadurch gekennzeichnet, daß** das Füllmaterial aufgesprüht wird.

3. Verfahren nach Anspruch 1 oder 2, **dadurch gekennzeichnet, daß** ein wasserund/oder fett- und/oder proteinhaltiges Füllmaterial verwendet wird.

4. Verfahren nach einem der vorangehenden Ansprüche, **dadurch gekennzeichnet, daß** die Beschichtungstemperatur zwischen 30°C und 98°C beträgt, vorzugsweise 60°C.

5. Verfahren nach einem der vorangehenden Ansprüche, **dadurch gekennzeichnet, daß** der Druck in dem zweiten Schritt auf zwischen 20 mbar und 800 mbar, bevorzugt 200 mbar, abgesenkt wird.

6. Verfahren nach einem der vorangehenden Ansprüche, **dadurch gekennzeichnet, daß** die Hohlkörper durch Extrudieren hergestellt sind.

7. Verfahren nach einem der vorangehenden Ansprüche, **dadurch gekennzeichnet, daß** die Hohlkörper hohlzylindrisch sind.

8. Verfahren nach einem der vorangehenden Ansprüche, **dadurch gekennzeichnet, daß** die Hohlkörper aus einem porösen Material hergestellt sind.

9. Verfahren nach einem der vorangehenden Ansprüche, **dadurch gekennzeichnet, daß** die Hohlkörper vor dem ersten Schritt mit einem Beschichtungsmaterial vakuumbeschichtet werden.

10. Verfahren nach einem der vorangehenden Ansprüche. **dadurch gekennzeichnet, daß** die Hohlkörper vor dem ersten Schritt unter reduziertem Druck getrocknet werden.

11. Verfahren nach einem der vorangehenden Ansprüche, **dadurch gekennzeichnet, daß** die Hohlkörper Hohlräume aufweisen, die mit einem und/oder mehreren Endabschnitten zur Umgebung hin offen sind.

12. Verfahren nach einem der vorangehenden Ansprüche, **dadurch gekennzeichnet, daß** die Beschichtungstemperatur so eingestellt ist, daß die resultierende Viskosität des Füllmaterials dazu führt, daß das Füllmaterial weitestmöglich in die Hohlräume der Hohlkörper vordringt.

13. Verfahren nach einem der vorangehenden Ansprüche, **dadurch gekennzeichnet, daß** das Füllmaterial die Hohlräume vollständig ausfüllt.

14. Verfahren nach einem der vorangehenden Ansprüche, **dadurch gekennzeichnet, daß** in dem ersten Schritt eine solche Füllmaterialmenge verwendet wird, daß sich nach dem zweiten Schritt im wesentlichen kein Füllmaterial mehr außerhalb der Hohlräume auf den Hohlkörpern befindet.

15. Verfahren nach einem der vorangehenden Ansprüche, **dadurch gekennzeichnet, daß** eine Vielzahl von gefüllten Hohlkörpern gleichzeitig in einem Mischgefäß hergestellt wird, wobei die Hohlkörper während des ersten und/oder zweiten Schritts gerührt werden.

16. Verfahren nach einem der vorangehenden Ansprüche, **dadurch gekennzeichnet, daß** die gefüllten Hohlkörper nach dem zweiten Schritt mit einem Farb- und/oder Geschmacksstoffe enthaltenden Überzugsmaterial beschichtet werden.

17. Verfahren nach einem der vorangehenden Ansprüche, **dadurch gekennzeichnet, daß** ein Tiernahrungsmittel hergestellt wird.

## Claims

1. Process for the production of filled food hollow mouldings, in which each hollow moulding has at least one cavity, which is open to the environment and filled with a filling material solid at ambient temperature and having a cross-sectional dimension between approximately 0.25 mm² and approximately 1 cm², **characterized in that** in a first stage the hollow mouldings are coated at a reduced pressure with the filling material, a filling material coating temperature being set in such a way that the filling material is flowable and in which in a second step the pressure is raised, so that the flowable coating material enters the cavities.

2. Process according to claim 1, **characterized in that** the filling material is sprayed on.

3. Process according to claim 1 or 2, **characterized in that** use is made of a filling material containing water and/or fat and/or protein.

4. Process according to one of the preceding claims, **characterized in that** the coating temperature is between 30 and 98°C, preferably 60°C.

5. Process according to one of the preceding claims, **characterized in that** the pressure in the second step is lowered to between 20 and 800 mbar, preferably 200 mbar.

6. Process according to one of the preceding claims, **characterized in that** the hollow mouldings are produced by extrusion.

7. Process according to one of the preceding claims, **characterized in that** the hollow mouldings are hollow cylindrical.

8. Process according to one of the preceding claims, **characterized in that** the hollow mouldings are produced from a porous material.

9. Process according to one of the preceding claims, **characterized in that**, prior to the first step, the hollow mouldings are vacuum-coated with a coating material.

10. Process according to one of the preceding claims, **characterized in that**, prior to the first step, the hollow mouldings are dried under reduced pressure.

11. Process according to one of the preceding claims, **characterized in that** the hollow mouldings have cavities, which are open to the environment with one and/or several end portions.

12. Process according to one of the preceding claims, **characterized in that** the coating temperature is set in such a way that the resulting filling material viscosity leads to the filling material substantially advancing into the cavities of the hollow mouldings.

13. Process according to one of the preceding claims, **characterized in that** the filling material completely fills the cavities.

14. Process according to on eof the preceding claims, **characterized in that** such a filling material quantity is used in the first step that following the second step there is substantially no further filling material outside the cavities on the hollow mouldings.

15. Process according to one of the preceding claims, **characterized in that** a plurality of filled hollow mouldings is simultaneously produced in a mixing vessel, the hollow mouldings being stirred during the first and/or second step.

16. Process according to one of the preceding claims, **characterized in that**, following the second step, the filled hollow mouldings are coated with a covering material containing colouring and/or flavouring substances.

17. Process according to one of the preceding claims, **characterized in that** an animal food is produced.

## Revendications

1. Procédé de fabrication de corps creux de produits alimentaires remplis, dans lequel chaque corps creux comporte un espace creux ouvert vers l'environnement, rempli d'un matériau de remplissage solide à la température ambiante et présentant une dimension de section transversale comprise entre environ 0,25 mm² et environ 1 cm², **caractérisé en ce qu'**au cours d'une première étape, le corps creux est revêtu à pression réduite du matériau de remplissage, la température de revêtement du matériau de remplissage étant réglée de sorte que le matériau de remplissage soit apte à s'écouler, et **en ce qu'**au cours d'une deuxième étape, la pression est augmentée afin que le matériau de revêtement apte à s'écouler pénètre dans les espaces creux.

2. Procédé selon la revendication 1, **caractérisé en ce que** le matériau de remplissage est pulvérisé.

3. Procédé selon la revendication 1 ou 2, **caractérisé en ce qu'**on utilise un matériau de remplissage aqueux et/ou contenant des graisses et/ou des protéines.

4. Procédé selon l'une des revendications précédentes, **caractérisé en ce que** la température de revêtement est comprise entre 30°C et 90°C, de préférence 60°C.

5. Procédé selon l'une des revendications précédentes, **caractérisé en ce qu'**au cours de la deuxième étape, la pression est abaissée entre 20 mbars et 800 mbars, de préférence 200 mbars.

6. Procédé selon l'une des revendications précédentes, **caractérisé en ce que** les corps creux sont fabriqués par extrusion.

7. Procédé selon l'une des revendications précédentes, **caractérisé en ce que** les corps creux sont des cylindres creux.

8. Procédé selon l'une des revendications précédentes, **caractérisé en ce que** les corps creux sont fabriqués à partir d'un matériau poreux.

9. Procédé selon l'une des revendications précédentes, **caractérisé en ce qu'**avant la première étape, les corps creux sont revêtus sous vide d'un matériau de revêtement.

10. Procédé selon l'une des revendications précédentes, **caractérisé en ce qu'**avant la première étape, les corps creux sont séchés sous pression réduite.

11. Procédé selon l'une des revendications précédentes, **caractérisé en ce que** les corps creux comportent des espaces creux qui sont ouverts vers l'environnement par une ou plusieurs parties d'extrémité.

12. Procédé selon l'une des revendications précédentes, **caractérisé en ce que** la température de revêtement est réglée de sorte que la viscosité résultante du matériau de remplissage conduise à refouler le matériau de remplissage le plus loin possible dans les espaces creux des corps creux.

13. Procédé selon l'une des revendications précédentes, **caractérisé en ce que** le matériau de remplissage remplit complètement les espaces creux.

14. Procédé selon l'une des revendications précédentes, **caractérisé en ce qu'**au cours de la première étape, on utilise une quantité de matériau de remplissage telle qu'après la deuxième étape, il n'existe pratiquement plus de matériau de remplissage sur les corps creux en dehors des espaces creux.

15. Procédé selon l'une des revendications précédentes, **caractérisé en ce qu'**on fabrique simultanément dans un récipient de mélange une pluralité de corps creux remplis et **en ce que** les corps creux sont agités pendant la première et/ou la deuxième étape.

16. Procédé selon l'une des revendications précédentes, **caractérisé en ce qu'**après la deuxième étape, les corps creux remplis sont recouverts d'un matériau de revêtement contenant des substances colorantes et/ou gustatives.

17. Procédé selon l'une des revendications précédentes, **caractérisé en ce qu'**il est utilisé pour fabriquer de la nourriture pour les animaux.
